# EUROPÄISCHE PATENTSCHRIFT

(11) **EP 2 262 656 B1**
(45) Veröffentlichungstag und Bekanntmachung des Hinweises auf die Patenterteilung: **05.09.2012**
(21) Anmeldenummer: 09732754.8
(22) Anmeldetag: 17.04.2009
(51) Int. Cl.: B60K 5/08, F41H 7/00

(54) **KRAFTFAHRZEUG, INSBESONDERE MILITÄRISCHES KRAFTFAHRZEUG, SOWIE VERFAHREN ZUR STEUERUNG EINES KRAFTFAHRZEUGS**
MOTOR VEHICLE, PARTICULARLY MILITARY MOTOR VEHICLE, AND METHOD FOR CONTROLLING A MOTOR VEHICLE
VÉHICULE AUTOMOBILE, EN PARTICULIER VÉHICULE AUTOMOBILE MILITAIRE, ET PROCÉDÉ DE COMMANDE D'UN VÉHICULE AUTOMOBILE

(30) Priorität: 18.04.2008 DE 102008019656
(43) Veröffentlichungstag der Anmeldung: 22.12.2010
(73) Patentinhaber: Krauss-Maffei Wegmann GmbH & Co. KG, 80997 München (DE)
(72) Erfinder: LORENZ, Bernhard, 34299 Oberweser (DE); SCHEIBEL, Axel, 34266 Niestetal (DE)
(74) Vertreter: Feder Walter Ebert
(86) Internationale Anmeldenummer: PCT/DE2009/000495
(87) Internationale Veröffentlichungsnummer: WO 2009/127199

(56) Entgegenhaltungen:
- EP-A- 1 137 150
- DE-A1- 1 655 194
- DE-A1- 4 002 890
- DE-A1- 10 357 922
- DE-A1- 19 957 478
- DE-A1-102004 026 237
- FR-A- 1 489 584
- US-A- 3 810 513
- US-A- 4 203 375
- US-A- 4 551 632
- US-A1- 2003 051 477
- BIRCH S: "TWO INTO ONE WILL GO" AUTOMOTIVE ENGINEERING INTERNATIONAL, SAE INTERNATIONAL, WARRENDALE, PA, US, Bd. 107, Nr. 2, 1. Februar 1999 (1999-02-01), Seite 11, XP000801627 ISSN: 1543-849X

## Beschreibung

Die Erfindung betrifft ein Kraftfahrzeug, insbesondere militärisches Kraftfahrzeug, mit einem auf einem mindestens zweiachsigen Räderfahrwerk angeordneten Fahrzeug-Chassis und einem die Besatzung aufnehmenden, auf dem Fahrzeug-Chassis angeordneten, geschlossenen Missionsraum, wobei mindestens zwei Antriebssysteme mit jeweils einem Verbrennungsmotor, insbesondere einem Dieselmotor, vorhanden sind, von denen ein erstes, vorderes Antriebssystem im Bereich der vorderen Radachse angeordnet ist und ausschließlich auf die vordere Radachse wirkt, während ein zweites, hinteres Antriebssystem im Bereich einer hinteren Radachse angeordnet ist und ausschließlich auf mindestens eine hintere Radachse wirkt, sowie ein Verfahren zur Steuerung eines solchen Kraftfahrzeugs.

Bei üblichen militärischen Kraftfahrzeugen mit nur einem Antriebssystem ist das Fahrzeugkonzept grundsätzlich durch einen Kompromiss aus Anordnung des Antriebssystems und des Nutzvolumens gekennzeichnet. Dabei entsteht immer eine sub-optimale Auslegung des Gesamtsystems, die typischerweise zu negativen Wechselwirkungen hinsichtlich des Schutzkonzeptes führt. So müssen, beispielsweise bei bekannten Fahrzeugen, die Antriebskomponenten ebenfalls geschützt werden, da sonst die Beweglichkeit des Fahrzeugs nach einem Beschuss nicht mehr sichergestellt werden kann. Hieraus ergibt sich ein deutlich vergrößertes zu schützendes Volumen, das bei konstantem Schutzgewicht eine Reduktion des Schutzes für die Besatzung nach sich zieht.

Die gattungsbildende DE 10 2004 026 237 A1 offenbart ein militärisches Fahrzeug, welches aus drei Modulen aufgebaut ist. Hierbei ist zwischen einem Heckund einem Frontbaustein ein Hauptbaustein angeordnet. In dem Frontund Heckbaustein können jeweils Radachsen und Antriebe angeordnet sein, so dass bei Ausfall eines Bausteins auf Grund der Redundanz der Antriebe eine Restmobilität des Fahrzeugs gegeben ist. Als Antrieb können Verbrennungsmotoren und/oder ein Elektromotoren verwendet werden. Es ist lediglich die Vorderachse lenkbar, so dass bei einem Ausfall des vorderen Bausteins eine Restmobilität auf Grund der fehlenden Lenkbarkeit nur eingeschränkt gegeben ist.

Master-Slave-Systeme sind bekannt ans US 4 203 375 und US 2003/0051477.

Der Erfindung liegt die Aufgabe zugrunde, ein Kraftfahrzeug der eingangs genannten Art derart auszugestalten, dass eine Koordination der beiden Antriebssysteme erreicht wird.

Die Lösung dieser Aufgabe erfolgt erfindungsgemäß mit den Merkmalen aus dem kennzeichnenden Teil des Patentanspruchs 1. Ein erfindungsgemäßes Verfahren ist Bestandteil des Patentanspruches 16 Vorteilhafte weiterbildungen der Erfindung sind in den abhängigen Ansprüchen beschrieben.

Bei einem Kraftfahrzeug mit zwei Verbrennungsmotoren ist die Koordination der beiden Motoren von entscheidender Bedeutung. Gemäß einem Grundgedanken der Erfindung basiert das Fahrzeugkonzept auf dem Einsatz von mindestens zwei unabhängigen Antriebssystemen, also bei einem zweiachsigen Fahrzeug jeweils ein Antriebssystem pro Achse. Damit wird grundsätzlich eine maximale Redundanz der Antriebskomponenten sichergestellt. Ein Antriebssystem kann ein vollständiges System bestehend aus Verbrennungsmotor + Energiespeicher (z.B. Treibstofftank und/oder Batterieanlage) + Traktionselementen (z.B. Getriebe) + Steuerungs- und gegebenenfalls Regelungsvorrichtungen (z.B. Motorelektronik) darstellen. Darüber hinaus gelingt es mit diesem Fahrzeugkonzept, eine Reihe der oben erwähnten Leistungsparameter zu optimalisieren.

Erfindungsgemäß sind die beiden Antriebssysteme an ein gemeinsames Steuersystem derart angeschlossen, dass ein Antriebssystem als *Master* und das andere Antriebssystem als *Slave* betreibbar ist, oder umgehehrt.

Das insbesondere elektronische Steuersystem kann hierbei derart ausgestaltet sein, dass die Systemzustände der beiden Antriebssysteme abfragt und miteinander verglichen werden, wobei bei einer Ermittlung einer Abweichung das Slave-Antriebssystem derart gesteuert wird, dass es, insbesondere bei Überschreitung eines Toleranzbereiches, den Systemzustand des Masterantriebssystems annimmt.

Bevorzugt umfasst das Steuersystem aus Redundanzgründen zwei elektrisch miteinander verbundene Antriebsteuereinheiten, wobei jede Antriebsteuereinheit jeweils ein Antriebssystem steuert. Jedem Antriebssystem kann somit eine Antriebsteuereinheit zugehörig sein, welche beispielsweise die Steuerung eines Automatikgetriebes des jeweiligen Antriebssystems leistet. Wenn beispielsweise die Antriebsteuereinheit die Steuerung der Automatikgetriebe leistet, so kann durch die Master-Antriebssteuereinheit der Schaltzeitpunkt zum Schalten ermittelt und an die Slave-Antriebsteuereinheit übergeben werden, so dass ein zeitgleiches Schalten der beiden Automatikgetriebe erreicht wird.

Zur Erreichung des Master-Slave-Verhältnisses kann eine Antriebsteuereinheit als *Master* und eine Antriebsteuereinheit als *Slave* betreibbar sein, wobei die Master-Antriebsteuereinheit die Steuerung der Slave-Antriebsteuereinheit leistet. Bei Störung oder Ausfall der Master-Antriebsteuereinheit und/oder bei Störung oder Ausfall einer oder mehrerer Komponenten des Master-Antriebssystems kann dann die andere Antriebsteuereinheit die Masterfunktion, insbesondere automatisch, übernehmen.

Die innere Führbarkeit des Fahrzeugs kann dadurch verbessert werden, dass innerhalb des geschlossenen Missionsraums die gesamte Besatzung des Fahrzeugs gleichberechtigt an der akustischen und visuellen Kommunikation partizipieren kann. Damit werden die Randbedingungen für die Teilnahme aller Besatzungsmitglieder am Entscheidungsprozess geschaffen.

Die Überlebensfähigkeit des Fahrzeugs erfordert - neben dem Einsatz modernster Schutztechnologien - die Realisierung einer optimierten Durchhaltefähigkeit. Die Durchhaltefähigkeit eines Systems wird prinzipiell durch dessen Fähigkeit der Toleranz gegenüber von Störungen oder Schäden bestimmt. Dies kann durch die Anordnung eines autarken Antriebssystems für jede einzelne Achse erreicht werden. Die Autarkie umfasst dabei insbesondere sowohl die primären Antriebskomponenten als auch alle Sekundärkomponenten, wie beispielsweise Kühl- oder Ölkreisläufe, die für den Betrieb unter allen Einsatzbedingungen erforderlich sind. So kann beispielsweise jede Achse ein vollständiges Antriebssystem mit einem klassischen Verbrennungsmotor, insbesondere Dieselmotor, und einem direkt adaptierten Automatikgetriebe aufweisen. Der Einsatz eines automatischen Getriebes reduziert den erforderlichen Regelungsbedarf zwischen den Antriebssystemen auf ein Minimum.

Hinzu kommt, dass das zu schützende Volumen des Fahrzeugs verkleinert werden kann. Die einzelnen Antriebssysteme sind als Folge der realisierten Redundanz keine vitalen Komponenten des Fahrzeugsystems und können daher mit einem reduzierten Schutzniveau versehen werden.

Ein besonderer Vorteil des erfindungsgemäßen Fahrzeugkonzepts besteht auch darin, dass keine mechanischen Antriebselemente im Missionsraum, also dem Mannschaftsraum, angeordnet sein müssen, so dass die Nutzung des Missionsraums nicht durch das Vorhandensein von Fahrwerks- oder Antriebskomponenten beeinflusst wird. Damit lässt sich eine optimale, modulare, konfigurierbare Adaption des verfügbaren Verstauvolumens an die jeweiligen Einsatzerfordernisse des Fahrzeugsystems erreichen. Weiterhin ergibt sich eine optimale Gewichtsverteilung. Aus der Nutzung einer eigenständigen Antriebseinheit pro Achse leitet sich ein deutlich reduzierter Volumen- und Gewichtsbedarf für dessen Elemente ab. Darüber hinaus können die Antriebskomponenten in direkter Nähe der jeweiligen Achse angeordnet werden. Daraus leitet sich für die einzelnen Achslasten eine nahezu ideale Gewichtsverteilung ab.

Bevorzugt sind die vordere Radachse und die hintere Radachse voneinander vollständig mechanisch entkoppelt. Es werden somit keine Traktionselemente wie Wellen oder mechanische Differenziale zwischen den Antriebssystemen benötigt. Dadurch kann es auch vermieden werden, dass Antriebselemente unter dem Missionsraum angeordnet werden, so dass eine tiefe Lage des Missionsraums möglich ist, wodurch die Höhe des Fahrzeugs in vorteilhafter Weise verringerbar ist.

Bei einer besonders bevorzugten Ausgestaltung ist ein elektronisches Sperrdifferential zwischen der vorderen und der hinteren Radachse vorgesehen. Das elektronische Sperrdifferential kann hierbei die Funktion eines mechanischen Sperrdifferentials übernehmen, welches beispielsweise bei bekannten Allradfahrzeugen eingesetzt wird. Das Sperrdifferential ist somit vorteilhaft, wenn das Fahrzeug mit beiden Antriebssystemen angetrieben wird, aber die äußeren Bedingungen unterschiedliche Drehmomente an der vorderen und der hinteren Achse erfordern. Falls beispielsweise eine Achse "durchdreht" kann das Drehmoment solange verringert werden, bis eine ausreichende Reibung zwischen Rad und Untergrund gegeben ist.

Das elektronische Sperrdifferential kann derart ausgebildet sein, dass über eine Sensorik ein Schlupf zwischen der vorderen und der hinteren Radachse sensiert wird, wobei über Steuermittel die Drehmomente an den Radachsen angepasst werden, wobei insbesondere das Drehmoment an der Radachse mit der höheren Drehzahl abgesenkt wird. Die Sensorik kann hierbei die im Regelfall ohnehin vorhandenen ABS-Sensoren, welche die Drehzahl bzw. die Rotationsgeschwindigkeit der Räder oder der Radachsen messen, umfassen.

Bei einer vorteilhaften Ausgestaltung weist jedes Antriebssystem eine Getriebeentkopplungseinheit auf, mittels welcher jeweils das automatische Getriebe von der Radachse entkoppelbar ist. Eine solche Getriebeentkoppeleinheit beinhaltet den Vorteil, dass bei einem Fahren mit nur einem Antriebssystem der Motor und das Getriebe des anderen, nicht verwendeten Antriebssystems von den sich drehenden Rädern entkoppelt werden kann, so dass keine Hemmung durch das sich nicht in Betrieb befindliche Antriebssystem erfolgt. Bei Verwendung von Automatikgetrieben kann zudem eine Beschädigung des sich nicht in Betrieb befindlichen Getriebes verhindert werden.

Bevorzugt weist zudem jedes Antriebssystem ein Achsmittendifferential auf, wobei die Getriebeentkopplungseinheiten jeweils zwischen dem automatischen Getriebe und dem Achsmittendifferential angeordnet sind.

Insbesondere bei militärischen Fahrzeugen werden häufig Zusatzvorrichtungen verwendet, mit denen das Fahrzeug einrüstbar ist. Solche Rüstsätze können beispielsweise Winden, Hydraulikanlagen oder Waffenstationen sein und eine sehr hohe Leistung für den Betrieb erfordern. Zur Bereitstellung von Leistung für die Rüstsätze kann jedes Antriebssystem eine Sekundärabtriebseinheit mit einem Sekundärabtrieb aufweisen, über den mechanische Leistung für einen elektrischen Generator und/oder einen Rüstsatz des Kraftfahrzeugs auskoppelbar ist. Die Sekundärabtriebseinheit kann sich hierbei mitten im Kraftfluss befinden, beispielsweise zwischen Getriebe und Achsmittendifferential, so dass im Extremfall die volle mechanische Leistung des Verbrennungsmotors zur Verfügung steht. Der Sekundärabtrieb kann beispielsweise einen Abtriebsflansch mit einer Riemenscheibe umfassen.

Da im Regelfall elektrische Energie für die Rüstsätze benötigt wird, ist bevorzugt an mindestens eine Sekundärabtriebseinheit ein elektrischer Generator angeschlossen. Besonders bevorzugt ist sowohl an die Sekundärabtriebseinheit des vorderen als auch des hinteren Antriebssystems jeweils ein elektrischer Generator angeschlossen, die in ein gemeinsames elektrisches Netz zusammenschaltbar sind.

Die Sekundärabtriebseinheit und die Getriebeentkopplungseinheit können zu einer baulichen Einheit, insbesondere in einem Zwischengetriebe, zusammengefasst sein.

Durch das gemeinsame Steuersystem kann zudem eine bedarfsweise Umschaltung zwischen einem Betrieb mit einem Antriebssystem und einem Betrieb mit zwei Antriebssystemen erfolgen.

Das Aktivieren aller Antriebseinheiten des Fahrzeugs führt zu einer ausgeprägten Agilität des Fahrzeugs. Dies ist darauf zurückzuführen, dass die Summe der Einzelmotoren eine höhere Leistung zur Verfügung stellt als der zentrale Motor eines vergleichbaren klassischen Fahrzeugsystems. Jeder einzelne Verbrennungsmotor ist derart dimensioniert, dass er ein Fortbewegen des Fahrzeugs gewährleisten kann. Deshalb sollte bei dem erfindungsgemäßen Fahrzeug die Leistung jedes einzelnen Verbrennungsmotors größer als die Hälfte der Leistung des Verbrennungsmotors bei einem entsprechenden Fahrzeug mit nur einem Verbrennungsmotor sein, um beispielsweise auch ein Anfahren des Fahrzeugs an einem Hang durchführen zu können.

Abgeleitet aus einer ganzheitlichen Redundanz der Antriebsysteme kann jedes Antriebssystem auch einen eigenen Treibstofftank und/oder eine eigene Batterieanlage mit einer Starterbatterie umfassen. Die Starterbatterien können in vorteilhafter Weise miteinander elektrisch verbunden sein. Ferner können alle Starterbatterien jeweils von jedem der Antriebssysteme aus aufladbar sein.

Weiterhin ergibt sich der Vorteil, dass, beispielsweise im stationären Betrieb, die Bereitstellung der notwendigen elektrischen Energie von einem Triebwerk aus erfolgen kann. So können beispielsweise die Batterien aller Antriebseinheiten durch den Betrieb eines Triebwerks aufgeladen werden.

Die Starterbatterien können derart zusammenschaltbar sein, dass ein Starten des Kraftfahrzeugs durch Starten lediglich eines Verbrennungsmotors mittels der von beiden Starterbatterien bereitgestellten Leistung durchführbar ist. Dem liegt zu Grunde, dass die Verbrennungsmotoren wegen des in der Regel bei gepanzerten militärischen Fahrzeugen hohen Gesamtgewichts eine hohe Leistung für das Kaltstarten benötigen, die nunmehr von beiden Starterbatterien gemeinsam geliefert werden kann.

Für den Kaltstart des Fahrzeugs bei extrem niedrigen Temperaturen muss lediglich die Batteriekapazität eines Triebwerks gespeichert werden. Der Start der weiteren Triebwerke kann dann unter Nutzung der von dem bereits gestarteten Triebwerk erzeugten Energie erfolgen.

Im mobilen Betrieb kann die Reichweite des Fahrzeugs während des Betriebs auf Straßen oder im leichten Gelände durch Nutzung nur eines Antriebssystems deutlich vergrößert werden. Das Auftreten von Schäden - insbesondere auch von Gefechtsschäden - im Bereich eines Antriebssystems führt im Gegensatz zu klassischen Systemen nicht unausweichlich zum Verlust jeglicher Agilität. Die durch die verbleibenden Antriebssysteme bereitgestellte Antriebsleistung kann so dimensioniert werden, dass das Fahrzeug über eine hinreichende Restmobilität zum sicheren Erreichen eines geschützten Raumes verfügt.

Auch die Durchsetzungsfähigkeit des Fahrzeugs ist gesteigert. Die optimale Gewichtsverteilung bei gleichzeitiger Bereitstellung einer hinreichenden Antriebsleistung bildet beispielsweise die Basis für die Möglichkeit der Integration einer leistungsfähigen Waffenstation. Ein entscheidender Parameter ist hierbei die niedrige Dachhöhe des Fahrzeugs, die durch das Nichtvorhandensein von störenden Fahrwerks-oder Antriebskomponenten im Missionsraum bedingt ist.

Eine Steigerung der Mobilität ergibt sich, indem die Anordnung schwerer Komponenten, also des Antriebssystems mit Triebwerk, im Bereich zwischen den Rädern zu einem sehr tiefen Schwerpunkt des Gesamtsystems führt, was eine entscheidende Voraussetzung für einen schnellen und sicheren Betrieb im schweren Gelände und bei hohen Geschwindigkeiten darstellt.

Weiterhin eröffnet das erfindungsgemäße Fahrzeugsystem die Möglichkeit, den Missionsraum des Fahrzeugs im wesentlichen würfelförmig auszugestalten, wodurch das Nutzvolumen des Fahrzeugs infolge des günstigen Verhältnisses von Gewicht zu Fläche optimal gegen Bedrohungen geschützt werden kann.

Das erfindungsgemäße Fahrzeugkonzept kann auch auf drei- oder mehrachsige Fahrzeuge erstreckt werden.

Zudem kann es sinnvoll sein, wenn außer der lenkbaren vorderen Radachse eine weitere lenkbare hintere Radachse vorhanden ist, die an das gemeinsame Steuersystem angeschlossen ist. Hierbei kann auch die Lenkung im *Master-Slave*-Verfahren übertragen werden. Diese Übertragungen können grundsätzlich über elektrische Kabel erfolgen, so dass keine mechanischen Teile durch den Missionsraum oder unter dem Missionsraum geführt werden müssen. Bei einer Ausgestaltung mit zwei lenkbaren Achsen ergibt sich neben einer verbesserten Wendigkeit im Normalbetrieb auch eine erhöhte Redundanz, da bei einem Ausfall einer Lenkachse die Lenkung über die andere Achse erfolgen kann, so dass die Mobilität des Fahrzeugs gewährleistet ist.

Durch die Erfindung kann ein Fahrzeug bereitgestellt werden, bei welchem eine im Wesentlichen vollständige Mobilität auch bei Ausfall eines Antriebssystems gegeben ist. Ferner können eine Reihe wichtiger Leistungsparameter wie die Führbarkeit, die Überlebensfähigkeit und die Durchsetzungsfähigkeit optimalisiert werden, so dass die Leistungsfähigkeit des Gesamtsystems gesteigert werden kann.

Im Folgenden wird anhand der beigefügten Zeichnungen ein Ausführungsbeispiel für ein militärisches Kraftfahrzeug nach der Erfindung näher erläutert.

In den Zeichnungen zeigen:
- Fig. 1: in einer stark schematisierten perspektivischen Ansicht ein militärisches Kraftfahrzeug bei abgenommener Karosserie;
- Fig. 2: eine Aufsicht auf das Kraftfahrzeug gemäß Fig. 1;
- Fig. 3: das Kraftfahrzeug nach Fig. 1 und 2 in einer Seitenansicht bei abgenommener Karosserie;
- Fig. 4: in einer perspektivischen, teilweise explodierten Darstellung das Kraftfahrzeug nach Figuren 1 bis 3 mit den Karosserieteilen;
- Fig. 5: das Antriebskonzept des Fahrzeugs in einer diagrammatischen Darstellung;
- Fig. 6: das Zwischengetriebe des Fahrzeugs gemäß Fig. 1 in einer perspektivischen Darstellung;
- Fig. 7: das Zwischengetriebe gemäß Fig. 6 aus einer anderen Ansicht;
- Fig. 8: das Zwischengetriebe gemäß Fig. 6 ohne Gehäuse; und
- Fig. 9: das Zwischengetriebe gemäß Fig. 7 ohne Gehäuse.

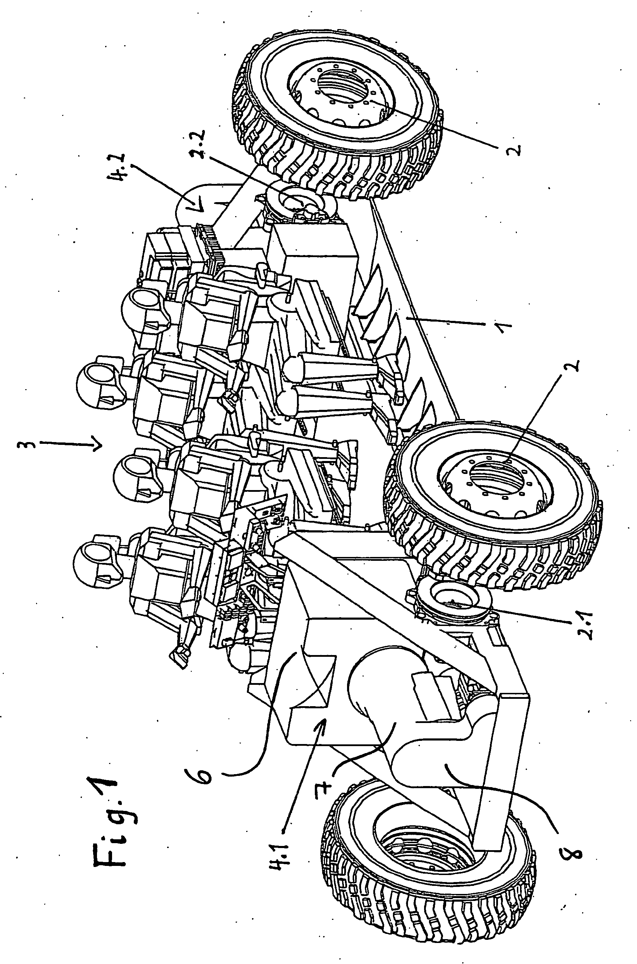

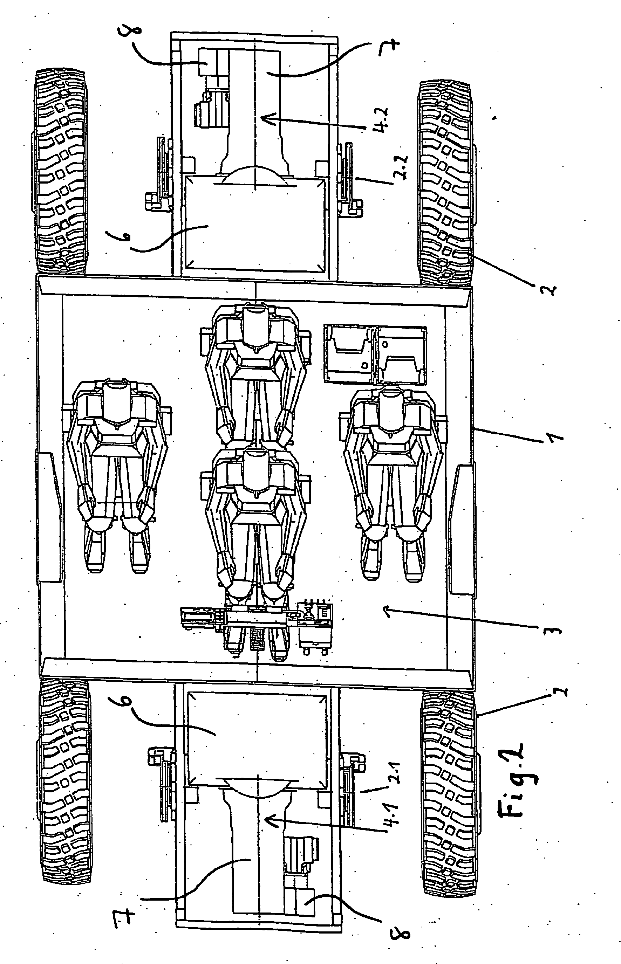

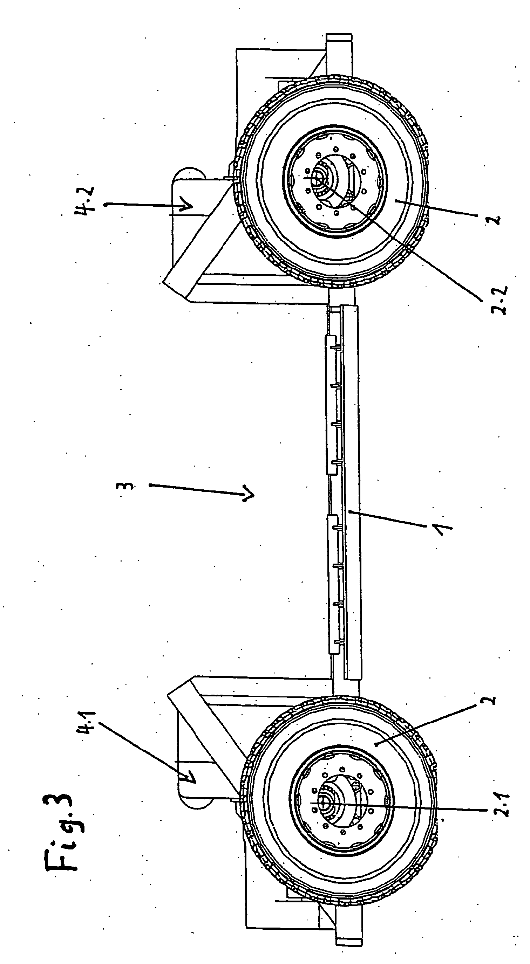

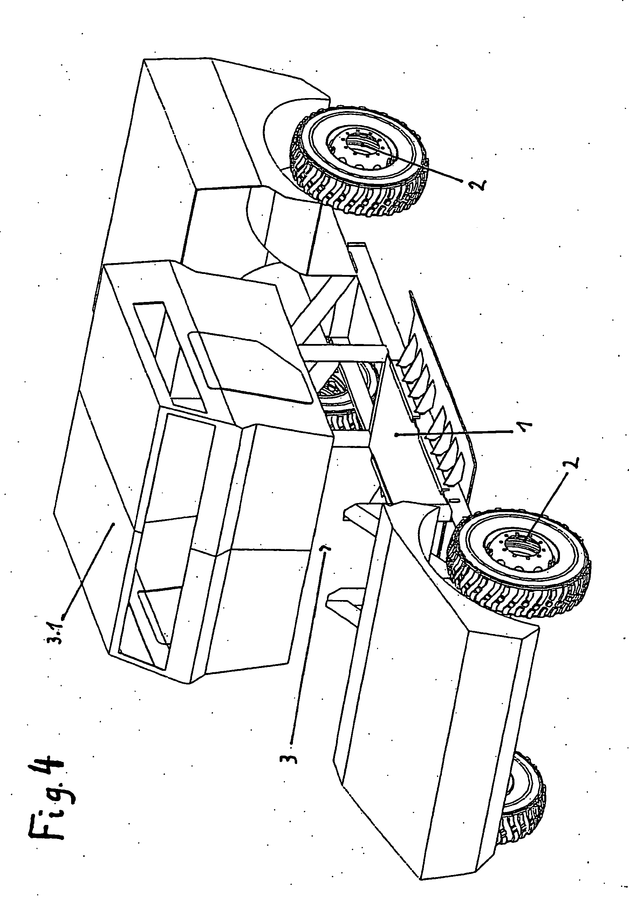

Das in den Fig. 1 bis 4 dargestellte militärische Kraftfahrzeug besitzt ein Fahrzeug-Chassis 1, das von einem zweiachsigen Räderfahrwerk 2 getragen wird. Im mittleren Bereich des Fahrzeug-Chassis 1 ist ein geschlossener und ballistisch durch entsprechend ausgestaltete Karosserieteile 3.1 besonders geschützter Missionsraum 3 zur Aufnahme der Besatzung angeordnet. Innerhalb des Missionsraums 3 kann die gesamte Besatzung gleichberechtigt an der akustischen und visuellen Kommunikation partizipieren.

Das Fahrzeug besitzt zwei autarke Antriebssysteme 4.1 und 4.2. Ein erstes Antriebssystem 4.1 wirkt ausschließlich auf die vordere, in den Zeichnungen nur angedeutete Radachse 2.1 und ist im Bereich dieser Radachse vor dem Missionsraum 3 angeordnet. Das zweite Antriebssystem 4.2 wirkt ausschließlich auf die hintere Radachse 2.2 und ist hinter dem Missionsraum 3 angeordnet. Im oder unter dem Missionsraum 3 befinden sich keinerlei Komponenten der Antriebssysteme 4.1 beziehungsweise 4.2.

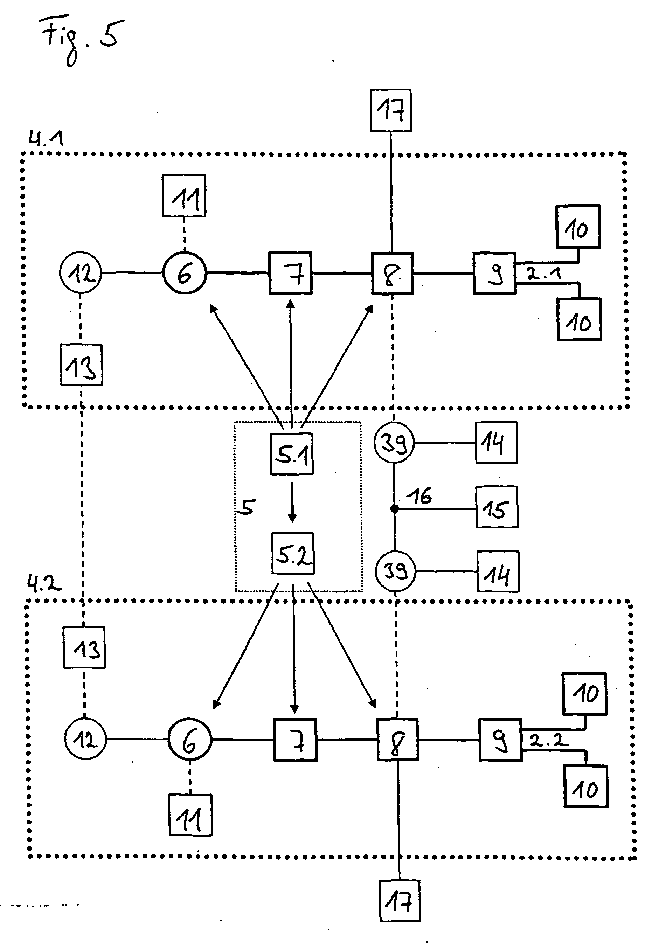

Die Fig. 5 zeigt ein Diagramm des Antriebskonzepts des Fahrzeugs. Das Fahrzeug weist zwei vollständig autarke Antriebssysteme 4.1 und 4.2 auf.

Jedes Antriebsystem 4.1 und 4.2 weist einen Dieselmotor als Verbrennungsmotor 6 und einen eigenen Treibstofftank 11 auf. Die Verwendung eines Dieselmotors 6 als primäre Antriebsmaschine resultiert aus dem technischen Sachverhalt, dass Dieseltriebwerke einen effektiven Wirkungsgrad bezüglich des mitgeführten Primärenergievolumens aufweisen. Darüber hinaus stellt der Dieselmotor die Fähigkeit des Betriebs mit einem Dieselersatzbetriebsstoff, beispielsweise F34, zur Verfügung.

Jedem Verbrennungsmotor 6 ist ein Automatikgetriebe 7 nachgeschaltet. Durch die beiden Automatikgetriebe 7 kann der erforderliche Regelungsbedarf zwischen den Antriebssträngen reduziert werden. Zudem ist keine mechanische Kopplung der vorderen Radachse 2.1 und der hinteren Radachse 2.2 erforderlich.

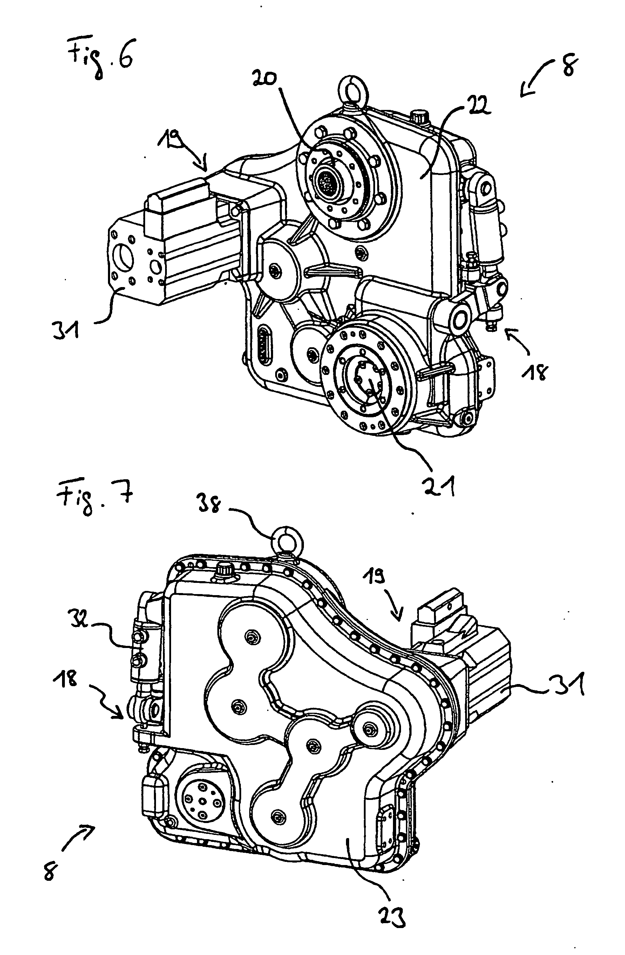

An das automatische Getriebe 7 ist in Abtriebsrichtung jeweils ein Zwischengetriebe 8 (Fig. 6) mit einer Getriebeentkopplungseinheit 18 und einer Sekundärabtriebseinheit 19 als bauliche Einheit nachgeschaltet. Mittels der Getriebeentkopplungseinheit 18 kann die Radachse 2.1, 2.2 von dem Automatikgetriebe 7 entkoppelt werden. Somit kann das Fahrzeug auch nur mit einem Antriebssystem 4.1, 4.2 betrieben werden, ohne dass das Automatikgetriebe 7 des nicht verwendeten Antriebssystems mitbewegt wird. An die Getriebeentkopplungseinheit 18 ist jeweils ein Achsmittendifferential 9 der vorderen Radachse 2.1 und der hinteren Radachse 2.2 angeschlossen, an welches wiederum die Radgetriebe 10 mit Rädern angeschlossen sind.

Mittels der Sekundärabtriebseinheit 19 kann mechanische Leistung aus den Antriebssystemen 4.1, 4.2 ausgekoppelt werden. An die Sekundärabtriebseinheit 19 sind mechanische Rüstsätze 17, beispielsweise eine Hydraulikpumpe, des Fahrzeugs anschließbar.

Ferner ist kann an jede Sekundärabtriebseinheit 19 jeweils ein elektrischer Generator 39 angeschlossen werden, welcher die mechanische Energie in elektrische Energie wandelt und weiteren Rüstsätzen 14 des Fahrzeugs zur Verfügung stellt. Die Generatoren 39 lassen sich zudem in ein gemeinsames elektrisches Netz 16 (z.B. mit einer Leistung von bis zu 300 kW) zusammenschalten, so dass der Rüstsatz 15 versorgbar ist, die eine besonders hohe Leistungsaufnahme aufweisen.

Von besonderer Bedeutung des Antriebskonzeptes ist es, dass die beiden Antriebssysteme 4.1 und 4.2 über ein gemeinsames Steuersystem 5 steuerbar sind. Das gemeinsame Steuersystem 5 umfasst hierbei aus Redundanzgründen zwei miteinander elektrisch verbundene elektronische Antriebsteuereinheiten 5.1 und 5.2, die jeweils einem Antriebssystem 4.1 und 4.2 zugeordnet sind. Jede Antriebsteuereinheit 5.1, 5.2 leistet die Steuerung des zugeordneten Antriebssystems 4.1, 4.2, beispielsweise durch Steuerung der Treibstoffzuführung des Verbrennungsmotors 6 und der Motorelektronik, der Schaltung des Automatikgetriebes 7 oder der Steuerung der Getriebeentkopplungseinheit 18. Die beiden elektronischen Antriebssteuereinheiten 5.1 und 5.2 können in einem gemeinsamen Gehäuse angeordnet sein, welches zudem auch innerhalb des Missionsraums 3 angeordnet sein kann.

An das Steuersystem 5 sind in nicht dargestellter Weise die Signalwertgeber der Bedienelemente, beispielsweise Gaspedal- oder Lenkrad-Signalwertgeber, angeschlossen, wobei diese Signale gemäß einer fahrzeugspezifischen Software verarbeitet und an die Antriebskomponenten wie Motor- und Getriebesteuerungselektronik weitergeleitet werden.

Das Steuersystem 5 übernimmt aber neben dieser originären Steuerfunktion auch die Koordination zwischen den beiden Antriebssystemen 4.1 und 4.2. Ein Ziel hierbei ist es, dass beide Antriebssysteme 4.1, 4.2, insbesondere beide Motoren und Automatikgetriebe, im gleichen Zustand betrieben werden. Hierfür fragt das Steuersystem 5 die Zustände der beiden Antriebssysteme 4.1, 4.2 ab und vergleicht diese. Bei einer Abweichung der Zustände wird das Slave-Antriebssystem 4.2 derart gesteuert, dass es den Zustand des Master-Antriebsystem 4.1 annimmt. Es erfolgt somit eine Übersteuerung des Slave-Antriebssystems durch das Master-Antriebssystem, bei der dem Slave-Antriebssystem der Zustand des Master-Antriebssystems vorgegeben wird.

Das Master-Slave-Verfahren kann hierbei derart ausgestaltet sein, dass bei Vermittlung einer Abweichung der Systemzustände eine Übersteuerung erst bei Überschreiten eines vorgegebenen Toleranzbereiches erfolgt, da kleinere Abweichungen häufig tolerabel sind.

In der Fig. 5 wird das vordere Antriebssystem 4.1 als Master betrieben, während das hintere Antriebssystem 4.2 als Slave betrieben wird. Auf Grund der Redundanz wäre aber auch ein umgekehrter Betrieb möglich.

Die mit dem Master-Antriebssystem 4.1 verbundene Antriebsteuereinheit 5.1 übernimmt die Masterfunktion, wohingegen die Antriebsteuereinheit 5.2 als Slave betrieben wird. Die Master-Antriebsteuereinheit 5.1 steuert folglich die Slave-Antriebsteuereinheit 5.2 durch Vorgabe von Steuerungsparametern, wenn eine Abweichung bei den Systemzuständen der Antriebssysteme 4.1, 4.2 festgestellt worden ist.

Bei Störung bzw. Ausfall der Master-Antriebsteuereinheit übernimmt automatisch die Slave-Antriebsteuereinheit die Masterfunktion. Gleiches gilt für den Fall einer Störung bzw. eines Ausfalls einer Komponente des Master-Antriebssystems. Wenn nur ein Antriebssystem betrieben werden soll, ist dieses automatisch das Master-Antriebssystem.

Die Antriebsteuereinheiten 5.1 und 5.2 stellen zudem die Funktion eines elektronischen Sperrdifferentials zwischen der vorderen Achse 2.1 und der hinteren Achse 2.2 zur Verfügung. Auf der Basis von nicht dargestellten ABS-Sensoren ermitteln die Antriebsteuereinheiten 5.1 und 5.2 indirekt die aktuellen Reibkoeffizienten an den einzelnen Radstationen, so dass das jeweils optimale Drehmoment an den einzelnen Achsen zur Verfügung gestellt werden kann. Somit verfügt das Antriebskonzept über ein elektronisches Sperrdifferential zwischen den Achsen, obwohl keine mechanische Kopplung zwischen den Achsen vorhanden ist. Die Anpassung der Drehmomente kann unabhängig vom Master-Slave-Betrieb erfolgen.

Eine Redundanz hinsichtlich der Antriebssteuereinheiten 5.1 und 5.2 ist nicht zwingend erforderlich, insbesondere dann nicht, wenn die Elektronik im geschützten Missionsraum angeordnet ist. Das Steuersystem 5 kann somit auch lediglich aus einer Antriebssteuereinheit bestehen, welche dann zwei Ausgänge für die beiden Antriebssysteme 4.1 und 4.2 aufweist.

Jeder Verbrennungsmotor 6 kann über einen eigenen elektrischen Startermotor 12 und eine eigene Starterbatterie 13 gestartet werden. Der Startermotor 12 dient zugleich als Generator für die Aufladung der Batterie 13. Die beiden Batterien 13 sind elektrisch miteinander verbunden, so dass jeder Motor 6 jede Batterie 13 aufladen kann. Zudem können für das Kaltstarten des Fahrzeugs die beiden Batterien 13 zusammengeschaltet werden, um einen ersten Verbrennungsmotor 6 zu starten. Nach dem erfolgten Start des ersten Triebwerks 6 erfolgt der Start des weiteren Triebwerks 6 unter Nutzung der von dem bereits gestarteten Triebwerk 6 erzeugten Energie.

Wenn nur ein Antriebssystem 4.1, 4.2 für die Fortbewegung des Fahrzeugs verwendet wird, kann Treibstoff eingespart werden, so dass die Reichweite des Fahrzeugs vergrößert wird. Das andere Antriebssystem kann aber auch zum Antrieb der Rüstsätze 14, 15, 17 mittels der Sekundärabtriebseinheit verwendet werden.

Insgesamt sind die beiden Antriebssysteme 4.1 und 4.2 vollständig autark voneinander aufgebaut, da jedes Antriebssystem
- ein Triebwerk mit einem Verbrennungsmotor 6,
- Traktionselemente zur Übertragung des Drehmoments auf die Räder, wie Getriebe 7, Einheit 8 aus Getriebeentkopplungseinheit und Sekundärabtriebseinheit, Achsmittendifferential 9, Rädergetriebe 10 sowie die erforderlichen Kraftübertragungselemente,
- Energiespeicher, wie Batterie 13 und Treibstofftank 11, und
- Steuer- bzw. Regeleinrichtungen, wie Motor- oder Automatikgetriebeelektroniken, aufweist.

Neben diesen primären Antriebskomponenten besteht zudem eine Autarkie hinsichtlich der sekundären Antriebskomponenten, wie Kühl-oder Ölkreisläufe, die zum Betrieb eines Antriebssystems erforderlich sind, so dass das Fahrzeug auch bei vollständigem Ausfall eines Antriebsystems fahrbar bleibt. Dies gilt auch für die nicht dargestellte Lenkung, da sowohl die Vorderachse 2.1 als auch die Hinterachse 2.2 lenkbar ausgestaltet sind, wodurch zudem die Wendigkeit des Fahrzeugs im Normalbetrieb gesteigert ist.

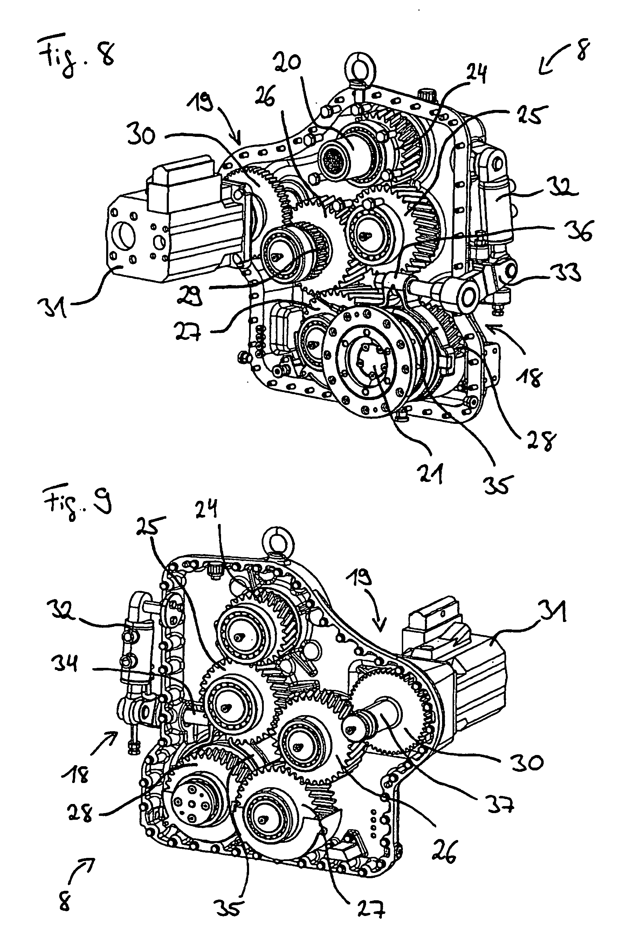

Die Fig. 6 bis 9 zeigen das Zwischengetriebe 8, wobei die Fig. 6 und 7 eine Vorder- und Rückansicht des Zwischengetriebes 8 mit einem geschlossenen Gehäuse bestehend aus zwei Gehäuseteilen 22 und 23 sowie die Fig. 8 und 9 eine entsprechende Vorder- und Rückansicht des Zwischengetriebes 8 mit abgenommenem Gehäuse zeigen. Über die Transportöse 38 kann das Zwischengetriebe 8 mittels eines Hebezeuges zu Montagezwecken angehoben werden.

Das Zwischengetriebe 8 ist zwischen dem Automatikgetriebe 7 und dem Achsmittendifferenzial 9 angeordnet. Es weist einen Eintrieb 20 auf, welches mit dem Automatikgetriebe 7 in Verbindung steht. Ferner weist es einen Abtrieb 21 auf, welcher mit dem Achsmittendifferenzial 9 in Verbindung steht.

Wie in Fig. 9 dargestellt, beinhaltet das Zwischengetriebe 8 mehrere Getrieberäder, wobei der Kraftfluss von dem Eintrieb 20 über das Getrieberad 24, das Getrieberad 25, das Getrieberad 26, das Getrieberad 27 und das Getrieberad 28 zum Abtrieb 21 verläuft. Die Getrieberäder 24 bis 28 sind S-förmig angeordnet, wobei durch diese Kaskade ein Achsversatz (drop) zwischen Eintrieb 20 und Abtrieb 21 sowie zugleich eine Untersetzung erfolgt.

Das Zwischengetriebe umfasst eine Sekundärabtriebseinheit 19. Auf dem Getrieberad 26 ist gemäß Figur 9 ein konzentrisches Ritzel 29 angeordnet, welches in Eingriff mit einem weiteren Ritzel 30 steht. Das Ritzel 30 ist mit einer Abtriebswelle 37 verbunden, welche mit einer Hydraulikpumpe 31 als Rüstsatz des Fahrzeugs verbunden ist. Hierdurch erfolgt somit ein Sekundärabtrieb, so dass die Ritzel 29 und 30 sowie die Abtriebswelle 37 die Sekundärabtriebseinheit 19 darstellen. An die Abtriebswelle 37 könnte auch in nicht dargestellter Weise ein elektrischer Generator angeschlossen werden.

Die Hydraulikpumpe 31, über die beispielsweise eine nicht dargestellte Seilwinde antreibbar ist, weist bevorzugt eine geringe Leerlaufhemmung auf, da sie auch im Normalbetrieb über die Sekundärabtriebseinheit 19 mit dem Zwischengetriebe 8 verbunden ist.

Das Zwischengetriebe 8 weist zudem eine Getriebeentkopplungseinheit 18 auf. Mittels der Getriebeentkopplungseinheit kann das Achsmittendifferenzial 9 von dem Automatikgetriebe 7 entkoppelt werden. Hierzu wird innerhalb des Zwischengetriebes 8 der Kraftfluss unterbrochen. Zu diesem Zweck umfasst die Getriebeentkopplungseinheit 18 eine nicht dargestellte Klauenkupplung, welche den Abtrieb 21 mit dem Getrieberad 28 verbindet.

Die federbelastete Klauenkupplung kann wie folgt ein- bzw. ausgerückt werden: Das Zwischengetriebe 8 weist einen Hydraulikzylinder 32 auf, an welchen ein Anlenkhebel 33 angelenkt ist. Der Anlenkhebel 33 ist mit einer Ausrückwelle 34 verbunden, die wiederum mit einer Gabel 36 mit zwei Schenkeln 35 in Verbindung steht. Durch Ausfahren des Hydraulikzylinders 32 erfolgt über den Anlenkhebel 33 eine Drehung der Ausrückwelle 34 sowie der Gabel 36, wodurch die Klauenkupplung gegen die Federkraft von nicht dargestellten Tellerfedern ausgerückt wird. Zum Einrücken der Klauenkupplung wird der Hydraulikzylinder 32 wieder eingefahren, so dass über die Federkraft der Tellerfedern die Rückstellung der Klauenkupplung erfolgt.

Bei entkoppelter Stellung der Getriebeentkopplungseinheit 18 kann die gesamte Motorleistung über die Sekundärabtriebseinheit 19 ausgekoppelt werden. Das Zwischengetriebe 8 stellt somit ein Verteilergetriebe mit Leistungsverzweigung 19 und Ausrückkupplung 18 dar.

### Bezugszeichenliste:

- 1: Fahrzeug-Chassis
- 2: Rad
- 2.1: vordere Radachse
- 2.2: hintere Radachse
- 3: Missionsraum
- 4.1: vorderes Antriebssystem
- 4.2: hinteres Antriebssystem
- 5: Steuersystem
- 5.1: vordere Antriebsteuereinheit
- 5.2: hintere Antriebsteuereinheit
- 6: Verbrennungsmotor
- 7: Automatikgetriebe
- 8: Zwischengetriebe
- 9: Achsmittendifferential
- 10: Rädergetriebe
- 11: Treibstofftank
- 12: Startermotor
- 13: Starterbatterie
- 14: Rüstsatz
- 15: Rüstsatz
- 16: elektrisches Netz
- 17: Rüstsatz
- 18: Getriebeentkopplungseinheit
- 19: Sekundärabtriebseinheit
- 20: Eintrieb
- 21: Abtrieb
- 22: Gehäuseteil
- 23: Gehäuseteil
- 24: Getrieberad
- 25: Getrieberad
- 26: Getrieberad
- 27: Getrieberad
- 28: Getrieberad
- 29: Ritzel
- 30: Ritzel
- 31: Hydraulikpumpe
- 32: Hydraulikzylinder
- 33: Anlenkhebel
- 34: Ausrückwelle
- 35: Schenkel
- 36: Gabel
- 37: Abtriebswelle
- 38: Transportöse
- 39: Generator

## Patentansprüche

1. Kraftfahrzeug, insbesondere militärisches Kraftfahrzeug, mit einem auf einem mindestens zweiachsigen Räderfahrwerk angeordneten Fahrzeug-Chassis und einem die Besatzung aufnehmenden, auf dem Fahrzeug-Chassis angeordneten, geschlossenen Missionsraum, wobei mindestens zwei Antriebssysteme (4.1, 4.2) mit jeweils einem Verbrennungsmotor (6), insbesondere einem Dieselmotor, vorhanden sind, von denen ein erstes, vorderes Antriebssystem (4.1) im Bereich der vorderen Radachse (2.1) angeordnet ist und ausschließlich auf die vordere Radachse (2.1) wirkt, während ein zweites, hinteres Antriebssystem (4.2) im Bereich einer hinteren Radachse (2.2) angeordnet ist und ausschließlich auf mindestens eine hintere Radachse (2.2) wirkt, ***dadurch gekennzeichnet*, dass** die beiden Antriebssysteme (4.1, 4.2) an ein gemeinsames Steuersystem (5) derart angeschlossen sind, dass ein Antriebssystem (4.1) als *Master* und das andere Antriebssystem (4.2) als *Slave* betreibbar ist, oder umgekehrt.

2. Kraftfahrzeug nach Anspruch 1, **dadurch gekennzeichnet, dass** das insbesondere elektronische Steuersystem derart ausgestaltet ist, dass die Systemzustände der beiden Antriebssysteme (4.1, 4.2) abfragt und miteinander verglichen werden, wobei bei einer Ermittlung einer Abweichung, insbesondere bei Überschreitung eines Toleranzbereiches, das Slave-Antriebssystem (4.2) derart gesteuert wird, dass es den Systemzustand des Masterantriebssystems (4.1) annimmt.

3. Kraftfahrzeug nach Anspruch 1 oder 2, **dadurch gekennzeichnet, dass** das Steuersystem (5) zwei elektrisch miteinander verbundene Antriebsteuereinheiten (5.1, 5.2) umfasst, wobei jede Antriebsteuereinheit (5.1, 5.2) jeweils ein Antriebssystem (4.1, 4.2) steuert, insbesondere wobei eine Antriebsteuereinheit (5.1) als *Master* und eine Antriebsteuereinheit (5.2) als Slave betreibbar ist und die Master-Antriebsteuereinheit (5.1) die Steuerung der Slave-Antriebsteuereinheit (5.2) leistet.

4. Kraftfahrzeug nach Anspruch 3, **dadurch gekennzeichnet, dass** bei Störung oder Ausfall der Master-Antriebsteuereinheit (5.1) und/oder bei Störung oder Ausfall einer oder mehrerer Komponenten des Master-Antriebssystems (4.1) die andere Antriebsteuereinheit (5.2) die Masterfunktion übernimmt.

5. Kraftfahrzeug nach einem der vorhergehenden Ansprüche, **dadurch gekennzeichnet, dass** der ballistisch geschützte Missionsraum (3) auf einem mittleren Bereich des Fahrzeug-Chassis (1) zwischen dem vorderen Antriebssystem (4.1) und dem hinteren Antriebssystem (4.2) angeordnet ist, wobei der Missionsraum (3) insbesondere mit einem stärkeren Schutz versehen ist als auf dem Fahrzeug-Chassis (1) angeordnete Räume zur Aufnahme der Antriebssysteme (4.1, 4.2).

6. Kraftfahrzeug nach einem der vorhergehenden Ansprüche, **dadurch gekennzeichnet, dass** jedes Antriebssystem (4.1, 4.2) gegenüber dem anderen Antriebssystem (4.2, 4.1) autark aufgebaut ist, insbesondere sowohl im Hinblick auf die primären Antriebskomponenten als auch im Hinblick auf die sekundären Antriebskomponenten.

7. Kraftfahrzeug nach einem der vorhergehenden Ansprüche, **gekennzeichnet durch** ein elektronisches Sperrdifferential zwischen der vorderen und der hinteren Radachse (2.1, 2.2).

8. Kraftfahrzeug nach Anspruch 7, **dadurch gekennzeichnet, dass** es eine Sensorik zur Erfassung eines Schlupfes zwischen der vorderen und der hinteren Radachse (2.1, 2.2) sowie Steuermittel zur Steuerung der Drehmomente an den Radachsen (2.1, 2.2) aufweist, wobei die Sensorik insbesondere ABS-Sensoren umfasst.

9. Kraftfahrzeug nach einem der vorhergehenden Ansprüche, **dadurch gekennzeichnet, dass** jedes Antriebssystem (4.1, 4.2) eine Getriebeentkopplungseinheit (18) aufweist, mittels welcher jeweils das automatische Getriebe (7) von der Radachse (2.1, 2.2) entkoppelbar ist, insbesondere wobei jedes Antriebssystem (4.1, 4.2) ein Achsmittendifferential (9) aufweist und die Getriebeentkopplungseinheit (18) jeweils zwischen dem automatischen Getriebe (7) und dem Achsmittendifferential (9) angeordnet ist.

10. Kraftfahrzeug nach einem der vorhergehenden Ansprüche, **dadurch gekennzeichnet, dass** jedes Antriebssystem (4.1, 4.2) eine Sekundärabtriebseinheit (19) mit einem Sekundärabtrieb aufweist, über den mechanische Leistung für einen elektrischen Generator (39) und/oder einen Rüstsatz (14, 15, 17) des Kraftfahrzeugs auskoppelbar ist, insbesondere wobei an mindestens eine Sekundärabtriebseinheit (19) ein elektrischer Generator (39) angeschlossen ist.

11. Kraftfahrzeug nach Anspruch 10, **dadurch gekennzeichnet, dass** an beide Sekundärabtriebseinheiten (19) des vorderen und des hinteren Antriebssystems (4.1, 4.2) jeweils ein elektrischer Generator (39) angeschlossen ist, die in ein gemeinsames elektrisches Netz (16) zusammenschaltbar sind.

12. Kraftfahrzeug nach Anspruch 9 und nach einem der Ansprüche 10 oder 11, **dadurch gekennzeichnet, dass** die Sekundärabtriebseinheit (19) und die Getriebeentkopplungseinheit (18) als Zwischengetriebe (8) zu einer baulichen Einheit zusammengefasst sind.

13. Kraftfahrzeug nach einem der vorhergehenden Ansprüche, **dadurch gekennzeichnet, dass** jedem Antriebssystem (4.1, 4.2) eine eigene Starter-Batterie (13) zugeordnet ist, insbesondere wobei die Starterbatterien (13) elektrisch miteinander verbunden sind.

14. Kraftfahrzeug nach Anspruch 13, **dadurch gekennzeichnet, dass** alle Starterbatterien (13) jeweils von jedem der Antriebssysteme (4.1, 4.2) aus aufladbar sind und/oder dass die Starterbatterien (13) derart zusammenschaltbar sind, dass ein Starten des Kraftfahrzeugs durch Starten lediglich eines Verbrennungsmotors (6) mittels der von beiden Starterbatterien (13) bereitgestellten Leistung durchführbar ist.

15. Kraftfahrzeug nach einem der vorhergehenden Ansprüche, **dadurch gekennzeichnet, dass** das Fahrzeug außer einer lenkbaren vorderen Radachse (2.1) eine weitere lenkbare hintere Radachse (2.2) aufweist, die an das Steuersystem angeschlossen ist.

16. Verfahren zur Steuerung eines Kraftfahrzeugs, insbesondere militärisches Kraftfahrzeug, mit einem auf einem mindestens zweiachsigen Räderfahrwerk angeordneten Fahrzeug-Chassis und einem die Besatzung aufnehmenden, auf dem Fahrzeug-Chassis angeordneten, geschlossenen Missionsraum, wobei mindestens zwei Antriebssysteme (4.1, 4.2) mit jeweils einem Verbrennungsmotor (6), insbesondere einem Dieselmotor, vorhanden sind, von denen ein erstes, vorderes Antriebssystem (4.1) im Bereich der vorderen Radachse (2.1) angeordnet ist und ausschließlich auf die vordere Radachse (2.1) wirkt, während ein zweites, hinteres Antriebssystem (4.2) im Bereich einer hinteren Radachse (2.2) angeordnet ist und ausschließlich auf mindestens eine hintere Radachse (2.2) wirkt, ***dadurch gekennzeichnet*, dass** die beiden Antriebssysteme (4.1, 4.2) an ein gemeinsames Steuersystem (5) derart angeschlossen sind, dass ein Antriebssystem (4.1) als *Master* und das andere Antriebssystem (4.2) als *Slave* betrieben werden, oder umgekehrt.

17. Verfahren zur Steuerung nach Anspruch 16, **dadurch gekennzeichnet, dass** das insbesondere elektronische Steuersystem die Systemzustände der beiden Antriebssysteme (4.1, 4.2) abfragt und miteinander vergleicht, wobei bei einer Ermittlung einer Abweichung, insbesondere bei Überschreitung eines Toleranzbereiches, das Slave-Antriebssystem (4.2) derart gesteuert wird, dass es den Systemzustand des Masterantriebssystems (4.1) annimmt.

18. Verfahren zur Steuerung nach Anspruch 16 oder 17, **dadurch gekennzeichnet, dass** über eine Sensorik ein Schlupf zwischen der vorderen und der hinteren Radachse (2.1, 2.2) sensiert wird, wobei über Steuermittel das Drehmoment an der Radachse mit der höheren Drehzahl abgesenkt wird.

## Claims

1. Motor vehicle, in particular military motor vehicle, having a vehicle chassis arranged on an at least biaxial wheeled undercarriage and a closed mission compartment which accommodates the crew and is arranged on the vehicle chassis, wherein at least two drive systems (4.1, 4.2) having one internal combustion engine (6) respectively, in particular a diesel engine are present, from which drive systems (4.1, 4.2) a first, front drive system (4.1) is arranged in the region of the front wheel axle (2.1) and acts exclusively on the front wheel axle (2.1), while a second rear drive system (4.2) is arranged in the region of a rear wheel axle (2.2) and acts exclusively on at least one rear wheel axle (2.2), **characterised in that** the two drive systems (4.1, 4.2) are connected to a common control system (5) in such a way that a drive system (4.1) is operable as master and the other drive system (4.2) is operable as slave, or vice-versa.

2. Motor vehicle according to Claim 1, **characterised in that** the in particular electronic control system is configured in such a way that the system states of the two drive systems (4.1, 4.2) are retrieved and compared with each other, wherein in the case that a variance is determined, in particular in the case that a tolerance range is exceeded, the slave drive system (4.2) is controlled in such a way that it adopts the system state of the master drive system (4.1).

3. Motor vehicle according to Claim 1 or 2, **characterised in that** the control system (5) comprises two drive control units (5.1, 5.2) electrically connected to each other, wherein each drive control unit (5.1, 5.2) respectively controls a drive system (4.1, 4.2), in particular wherein a drive control unit (5.1) is operable as master and a drive control unit (5.2) is operable as slave and the master drive control unit (5.1) provides the control for the slave drive control system (5.2).

4. Motor vehicle according to Claim 3, **characterised in that** in the case of a fault or failure of the master drive control unit (5.1) and/or in the case of a fault or failure of one or a plurality of components of the master drive system (4.1) the other drive control unit (5.2) takes on the master function.

5. Motor vehicle according to any one of the preceding claims, **characterised in that** the ballistically-protected mission compartment (3) is arranged on a central region of the vehicle chassis (1) between the front drive system (4.1) and the rear drive system (4.2), wherein the mission compartment (3) is in particular provided with a stronger protection than the compartments arranged on the vehicle chassis (1) for accommodating the drive systems (4.1, 4.2).

6. Motor vehicle according to any one of the preceding claims, **characterised in that** each drive system (4.1, 4.2) is constructed independently in relation to the other drive system (4.2, 4.1), in particular both with regard to the primary drive components as well as with regard to the secondary drive components.

7. Motor vehicle according to any one of the preceding claims, **characterised by** an electronic limited slip differential between the forward and the rear wheel axle (2.1, 2.2).

8. Motor vehicle according to Claim 7, **characterised in that** it has a sensor system for detecting a slip between the front and the rear wheel axle (2.1, 2.2) as well as control means for controlling the torque on the wheel axles (2.1, 2.2), wherein the sensor system comprises in particular ABS sensors.

9. Motor vehicle according to any one of the preceding claims, **characterised in that** each drive system (4.1, 4.2) has a gear decoupling unit (18), by means of which the automatic gear (7) can in each case be decoupled from the wheel axle (2.1, 2.2), in particular wherein each drive system (4.1, 4.2) has an axle centre differential (9) and the gear decoupling unit (18) is arranged in each case between the automatic gear unit (7) and the axle centre differential (9).

10. Motor vehicle according to any one of the preceding claims, **characterised in that** each drive system (4.1, 4.2) has a secondary output unit (19) with a secondary output, via which mechanical power for an electric generator (39) and/or a modification kit (14, 15, 17) of the motor vehicle can be coupled out, in particular wherein an electric generator (39) is connected to at least one secondary output unit (19).

11. Motor vehicle according to Claim 10, **characterised in that** an electric generator (39) is connected to both secondary output units (19) of the front and the rear drive systems (4.1, 4.2) respectively, which can be interconnected in a common electrical network (16).

12. Motor vehicle according to Claim 9 and according to any one of Claims 10 or 11, **characterised in that** the secondary output unit (19) and the gear decoupling unit (18) are combined as intermediate gears (8) in one structural unit.

13. Motor vehicle according to any one of the preceding claims, **characterised in that** each drive system (4.1, 4.2) is assigned an individual starter battery (13), in particular wherein the starter batteries (13) are connected electrically to each other.

14. Motor vehicle according to Claim 13, **characterised in that** all starter batteries (13) can be respectively recharged from each of the drive systems (4.1, 4.2) and/or **in that** the starter batteries (13) are interconnected in such a way that starting the motor vehicle can be carried out by starting only one internal combustion engine (6) by means of the power provided by both starter batteries (13).

15. Motor vehicle according to any one of the preceding claims, **characterised in that** in addition to a steerable front wheel axle (2.1) the vehicle has a further steerable rear wheel axle (2.2), which is connected to the control system.

16. Method for controlling a motor vehicle, in particular military motor vehicle, having a vehicle chassis arranged on an at least biaxial wheeled undercarriage and a closed mission compartment which accommodates the crew and is arranged on the vehicle chassis, wherein at least two drive systems (4.1, 4.2) having one internal combustion engine (6) respectively, in particular a diesel engine are present, from which drive systems (4.1, 4.2) a first, front drive system (4.1) is arranged in the region of the front wheel axle (2.1) and acts exclusively on the front wheel axle (2.1), while a second rear drive system (4.2) is arranged in the region of a rear wheel axle (2.2) and acts exclusively on at least one rear wheel axle (2.2), **characterised in that** the two drive systems (4.1, 4.2) are connected to a common control system (5) in such a way that a drive system (4.1) is operated as master and the other drive system (4.2) is operated as slave, or vice-versa.

17. Method for controlling according to Claim 16, **characterised in that** the in particular electronic control system retrieves the system states of the two drive systems (4.1, 4.2) and compares them with each other, wherein in the case that a variance is determined, in particular in the case that a tolerance range is exceeded, the slave drive system (4.2) is controlled in such a way that it adopts the system state of the master drive system (4.1).

18. Method for controlling according to Claim 16 or 17, **characterised in that** a slip between the front and the rear wheel axle (2.1, 2.2) is sensed via a sensor system, wherein the torque on the wheel axle with the higher rotational speed is reduced via control means.

## Revendications

1. Véhicule automobile, en particulier véhicule automobile militaire, avec un châssis de véhicule disposé sur un train de roulement à roues à au moins deux essieux et un espace de mission fermé recevant l'équipage, disposé sur le châssis du véhicule, dans lequel au moins deux systèmes d'entraînement (4.1, 4.2) comprenant chacun un moteur à combustion interne (6), en particulier un moteur diesel, sont présents, dont un premier système d'entraînement avant (4.1) est disposé dans la zone de l'essieu avant (2.1) et agit exclusivement sur l'essieu avant (2.1), alors qu'un second système d'entraînement arrière (4.2) est disposé dans la zone d'un essieu arrière (2.2) et agit exclusivement sur au moins un essieu arrière (2.2), **caractérisé en ce que** les deux systèmes d'entraînement (4.1, 4.2) sont raccordés à un système de commande commun (5) de telle manière qu'un système d'entraînement (4.1) peut être utilisé comme maître et l'autre système d'entraînement (4.2) comme esclave ou inversement.

2. Véhicule automobile selon la revendication 1, **caractérisé en ce que** le système de commande, en particulier électronique, est configuré de telle manière que les états des deux systèmes d'entraînement (4.1, 4.2) soient interrogés et comparés l'un à l'autre, dans lequel en cas de calcul d'un écart, en particulier de dépassement d'une plage de tolérance, le système d'entraînement esclave (4.2) est commandé de telle manière qu'il accepte l'état du système d'entraînement maître (4.1).

3. Véhicule automobile selon la revendication 1 ou 2, **caractérisé en ce que** le système de commande (5) comporte deux unités de commande d'entraînement (5.1, 5.2) reliées électriquement entre elles, dans lequel chaque unité de commande d'entraînement (5.1, 5.2) commande respectivement un système d'entraînement (4.1, 4.2), dans lequel en particulier une unité de commande d'entraînement (5.1) peut être utilisée comme maître et une unité de commande d'entraînement (5.2) peut être utilisée comme esclave, et l'unité de commande d'entraînement maître (5.1) réalise la commande de l'unité de commande d'entraînement esclave (5.2).

4. Véhicule automobile selon la revendication 3, **caractérisé en ce qu'**en cas de perturbation ou de panne de l'unité de commande d'entraînement maître (5.1) et/ou en cas de perturbation ou de panne d'un ou de plusieurs composants du système d'entraînement maître (4.1), l'autre unité de commande d'entraînement (5.2) remplit la fonction de maître.

5. Véhicule automobile selon l'une quelconque des revendications précédentes, **caractérisées en ce que** l'espace de mission (3) muni d'une protection balistique est disposé sur une zone médiane du châssis du véhicule (1) entre le système d'entraînement avant (4.1) et le système d'entraînement arrière (4.2), dans lequel l'espace de mission (3) est en particulier pourvu d'une protection renforcée par rapport à celle des espaces disposés sur le châssis du véhicule (1) destinés à recevoir les systèmes d'entraînement (4.1, 4.2).

6. Véhicule automobile selon l'une quelconque des revendications précédentes, **caractérisé en ce que** chaque système d'entraînement (4.1, 4.2) est réalisé de manière à être autonome par rapport à l'autre système d'entraînement (4.2, 4.1), en particulier non seulement en ce qui concerne les composants d'entraînement primaires mais aussi en ce qui concerne les composants d'entraînement secondaires.

7. Véhicule automobile selon l'une quelconque des revendications précédentes, **caractérisé par** un différentiel à verrouillage électronique entre l'essieu avant et l'essieu arrière (2.1, 2.2).

8. Véhicule automobile selon la revendication 7, **caractérisé en ce qu'**il présente un dispositif de détection permettant le repérage d'un glissement entre l'essieu avant et l'essieu arrière (2.1, 2.2) ainsi que des moyens de commande pour la commande des couples sur les essieux (2.1, 2.2), dans lequel le dispositif de détection comporte en particulier des capteurs ABS.

9. Véhicule automobile selon l'une quelconque des revendications précédentes, **caractérisé en ce que** chaque système d'entraînement (4.1, 4.2) présente une unité de découplage de transmission (18), à l'aide de laquelle respectivement la transmission automatique (7) peut être découplée de l'essieu (2.1, 2.2), dans lequel, en particulier, chaque système d'entraînement (4.1, 4.2) présente un différentiel médian d'essieu (9) et l'unité de découplage de transmission (18) est disposée respectivement entre la transmission automatique (7) et le différentiel médian d'essieu (9).

10. Véhicule automobile selon l'une quelconque des revendications précédentes, **caractérisé en ce que** chaque système d'entraînement (4.1, 4.2) présente une unité de sortie secondaire (19) avec une sortie secondaire, par laquelle de la puissance mécanique peut être déclenchée pour un générateur électrique (39) et/ou un ensemble d'adaptation (14, 15, 17) du véhicule automobile, en particulier sachant qu'un générateur électrique (39) est raccordé à au moins une unité de sortie secondaire (19).

11. Véhicule automobile selon la revendication 10, **caractérisé en ce que** un générateur électrique (39) est raccordé aux deux unités respectives de sortie secondaires (19) des systèmes d'entraînement avant et arrière (4.1, 4.2), lesquels sont interconnectable dans un réseau électrique commun (16).

12. Véhicule automobile selon la revendication 9 et selon l'une quelconque des revendications 10 ou 11, **caractérisé en ce que** l'unité de sortie secondaire (19) et l'unité de découplage de transmission (18) sont réunies comme transmission intermédiaire (8) pour former une unité de construction.

13. Véhicule automobile selon l'une quelconque des revendications précédentes, **caractérisé en ce qu'**une propre batterie de démarrage (13) est associée à chaque système d'entraînement (4.1, 4.2), dans lequel, en particulier, les batteries de démarrage (13) sont reliées ensemble électriquement.

14. Véhicule automobile selon la revendication 13, **caractérisé en ce que** toutes les batteries de démarrage (13) peuvent être respectivement chargées depuis chaque système d'entraînement (4.1, 4.2) et/ou **en ce que** les batteries de démarrage (13) sont interconnectable de telle manière qu'un démarrage du véhicule automobile peut être réalisé uniquement par le démarrage d'un moteur à combustion interne (6) grâce à la puissance mise à disposition par les deux batteries de démarrage (13).

15. Véhicule automobile selon l'une quelconque des revendications précédentes, **caractérisé en ce que** le véhicule présente, outre un essieu avant dirigeable (2.1), un autre essieu arrière dirigeable (2.2) qui est raccordé au système de commande.

16. Procédé de commande d'un véhicule automobile, en particulier d'un véhicule automobile militaire, avec un châssis de véhicule disposé sur un train de roulement à roues à au moins deux essieux et avec un espace de mission fermé recevant l'équipage, disposé sur le châssis de véhicule, dans lequel au moins deux systèmes d'entraînement (4.1, 4.2) comprenant chacun un moteur à combustion interne (6), en particulier un moteur diesel, sont présents, dont un premier système d'entraînement avant (4.1) est disposé dans la zone de l'essieu avant (2.1) et agit exclusivement sur l'essieu avant (2.1), alors qu'un second système d'entraînement arrière (4.2) est disposé dans la zone d'un essieu arrière (2.2) et agit exclusivement sur au moins un essieu arrière (2.2), **caractérisé en ce que** les deux systèmes d'entraînement (4.1, 4.2) sont raccordés à un système de commande commun (5) de telle manière qu'un système d'entraînement (4.1) soit utilisé comme maître et l'autre système d'entraînement (4.2) comme esclave ou inversement.

17. Procédé de commande selon la revendication 16, **caractérisé en ce que** le système de commande, en particulier électronique, interroge et compare l'un à l'autre les états des deux systèmes d'entraînement (4.1, 4.2), dans lequel en cas de calcul d'un écart, en particulier de dépassement d'une plage de tolérance, le système d'entraînement esclave (4.2) est commandé de telle manière qu'il accepte l'état du système d'entraînement maître (4.1).

18. Procédé de commande selon la revendication 16 ou 17, **caractérisé en ce qu'**un glissement est détecté entre l'essieu avant et l'essieu arrière (2.1, 2.2) par un dispositif de détection, dans lequel le couple sur l'essieu présentant la vitesse de rotation la plus élevée est abaissé par des moyens de commande.
